# EUROPÄISCHE PATENTANMELDUNG

(11) **EP 3 214 023 A2**
(43) Veröffentlichungstag der Anmeldung: **06.09.2017**
(21) Anmeldenummer: 17158588.8
(22) Anmeldetag: 01.03.2017
(51) Int. Cl.: B65G 17/32, B65G 17/42, B65G 17/46, B65G 47/38

(54) **FÖRDEREINRICHTUNG MIT EINER FÖRDERKETTE**

(30) Priorität: 04.03.2016 CH 2782016
(71) Anmelder: WRH Walter Reist Holding AG, 8272 Ermatingen (CH)
(72) Erfinder: Mäder, Carl Conrad, 8335 Hittnau (CH)
(74) Vertreter: Frei Patent Attorneys

(57) **Zusammenfassung**

Die Erfindung betrifft eine Fördereinrichtung (1) mit einer Förderkette (20), welche eine Mehrzahl von Kettengliedern (6) umfasst. Die Fördereinrichtung enthält ferner eine Mehrzahl von an der Förderkette (20) angebrachte Fördergutbehälter (3) zur Aufnahme eines Fördergutes (4). Die Fördergutbehälter (3) sind über mit der Förderkette (20) verbundenen Halteorgane (2) an der Förderkette (20) befestigt, wobei die Fördergutbehälter (3) jeweils vom Halteorgan (2) gehalten werden.

## Beschreibung

Die Erfindung liegt auf dem Gebiet der Fördertechnik und betrifft eine Fördereinrichtung mit einem Kettenförderer. Der Kettenförderer umfasst eine Förderkette sowie eine Mehrzahl von an der Förderkette angebrachten Fördergutbehältern zur Aufnahme eines Fördergutes.

Es ist bekannt, ein Fördergut auf der Förderauflage eines Kettenförderers aufliegend entlang eines Förderweges zu fördern. Das Fördergut liegt dabei der Förderauflage oftmals ungesichert auf. Bei solchen Fördereinrichtungen wird das Fördergut allerdings in der Regel in einer Förderebene ohne Gefälle oder Steigungen gefordert.

Solche Fördereinrichtungen bieten bekanntermassen wenig Gestaltungsfreiraum bei der Auslegung der Förderwege. Entsprechend eignen sich solche Fördereinrichtungen auch nicht für alle Einsatzgebiete.

Zwar bieten Fördereinrichtungen, bei welchen das Fördergut in einer Förderebene gefördert wird, den Vorteil, dass das Fördergut nicht mittels besonderer Massnahmen gegen ein Herabfallen gesichert werden muss. Oftmals genügen einfache seitliche Begrenzungen an der Förderauflage, welche verhindern dass das Fördergut durch Brems- oder Beschleunigungskräfte von der Förderauflage rutscht. Selbst geringe Steigungen und Gefälle lassen sich mit solchen einfachen Massnahmen recht gut bewältigen.

In gewissen Konstellationen, zum Beispiel bei Platzmangel, ist es allerdings erwünscht bzw. sogar erforderlich in die dritte Dimension auszuweichen. Der Miteinbezug der dritten Dimension lässt insbesondere sich kreuzende Förderwege zu, was den Gestaltungsspielraum bei der Planung der Förderwege erheblich erhöht.

Ferner werden durch die Führung der Förderwege in der dritten Dimension auch Bearbeitungsstationen auf unterschiedlichen Ebenen möglich.

Grosse Steigungen und Gefälle sowie Kurvenbahnen im Raum erfordern jedoch eine gute Sicherung des Fördergutes. So sind beispielsweise Greifer- oder Klammerförderer bekannt, welche das Fördergut mit ihren Greifer- bzw. Klammerschenkeln klemmend halten. Druckprodukte werden üblicherweise mittels Greifer- bzw. Klammerförderer gefördert.

Greifer- bzw. Klammerförderer sind jedoch nicht für jede Art von Fördergut geeignet. Dies trifft insbesondere für Stückgüter zu, welche in Stückgutaufnahmen von Stückgutbehältern einzeln oder gruppenweise gefördert werden.

Es ist daher Aufgabe vorliegender Erfindung, eine Fördereinrichtung vorzuschlagen, welche die Förderung von Stückgutbehältern mit Stückgütern im dreidimensionalen Raum ermöglicht. Die Fördereinrichtung soll insbesondere die Förderung der Stückgüter entlang von grossen Steigungen und Gefällen sowie entlang von Kurvenbahnen im Raum erlauben. Ferner soll zum Beispiel auch eine Förderung entlang einer wendelartigen Kurvenbahn und insbesondere eine Förderung kopfüber möglich sein.

Die Aufgabe wird durch eine Fördereinrichtung nach Anspruch 1 gelöst. Die abhängigen Ansprüche stellen Weiterbildungen und besondere Ausführungsformen der Erfindung dar.

Die Erfindung zeichnet sich nun dadurch aus, dass die Fördergutbehälter jeweils über ein direkt oder indirekt mit der Förderkette verbundenes Halteorgan an der Förderkette befestigt sind, wobei mindestens ein Fördergutbehälter jeweils von einem Halteorgan gehalten wird. Die Fördergutbehälter werden von den Halteorganen insbesondere lösbar gehalten.

Das Halteorgan enthält insbesondere Haltemittel, wie Halteelemente, über welche der Fördergutbehälter am Halteorgan gehalten wird.

Die Halterung kann klemmend, formschlüssig, reibschlüssig bzw. kraftschlüssig sein. Kombinationen davon sind ebenfalls möglich. Die Halterung kann auch mittels Magnetkraft erfolgen.

Die Halteelemente können zur Ausbildung einer klemmenden, formschlüssigen und/- oder reibschlüssigen bzw. kraftschlüssigen Halterung nachgiebig ausgebildet sein.

Die Förderkette umfasst eine Mehrzahl von Kettengliedern. Die einzelnen Halteorgane können dabei jeweils direkt oder indirekt mit einem oder mehreren Kettengliedern verbunden sein, insbesondere befestigt sein. Es ist auch möglich, dass die Kettenglieder Teil des Halteorgans ausbilden.

Das Halteorgan kann insbesondere jeweils einem einzelnen Kettenglied zugeordnet und an diesem befestigt. So kann pro Kettenglied jeweils ein Halteorgan vorgesehen sein.

Es kann allerdings auch vorgesehen sein, dass ein einzelnes Halteorgan über mehrere Kettenglieder an der Förderkette befestigt ist.

Grundsätzlich braucht nicht an jedem Kettenglied direkt oder indirekt ein Halteorgan angebracht zu sein. Es ist durchaus denkbar, dass zwischen zwei Halteorganen des Kettenförderers ein oder mehrere Kettenglieder als Abstandselemente ohne direkt oder indirekt an diesen befestigten Halteorgan angeordnet sind und so Lücken zwischen den Halteorganen bilden.

Die Förderkette ist im Förderabschnitt insbesondere unterhalb des Halteorgans bzw. unterhalb des Einschubabschnittes des Halteorgans oder des Aufnahmebereichs des Einschubabschnittes angeordnet.

Gemäss Erfindung nimmt das Halteorgan mindestens ein Fördergutbehälter auf. Das Halteorgan kann zur Aufnahme von ausschliesslich einem Fördergutbehälter ausgelegt sein. Das Halteorgan kann auch zur Aufnahme von mehreren Fördergutbehältern ausgelegt sein.

So bilden jeweils der mindestens eine Fördergutbehälter, das Halteorgan und gegebenenfalls ein Kettenglied insbesondere eine Fördereinheit aus.

Der mindestens eine Fördergutbehälter ist zur Erstellung der Halterung insbesondere entlang einer Einschubrichtung auf das Halteorgan schiebbar. Das Halteorgan ist insbesondere so ausgebildet und am Kettenförderer angeordnet, dass die Einschubrichtung bezogen auf die Förderrichtung insbesondere eine seitliche Komponente aufweist. "Seitlich" bedeutet dabei quer zur Förderrichtung.

Die Einschubrichtung kann bezogen auf die Förderrichtung auch eine Richtungskomponente in Förderrichtung aufweisen.

Die Einschubrichtung kann allerdings alternativ auch eine Richtungskomponente aufweisen, welche der Förderrichtung entgegen gerichtet ist.

Die Einschubrichtung schliesst mit der Förderrichtung insbesondere einen Winkel von grösser 0° (Winkelgrade) ein.

Die Einschubrichtung schliesst mit der Förderrichtung insbesondere einen Winkel von kleiner 90° (Winkelgrade) ein.

Der Winkel kann ein spitzer Winkel sein. Der spitze Winkel beträgt beispielsweise 10° bis 80°, insbesondere 20° bis 70°.

Der Winkel kann auch ein rechter Winkel von 90° sein.

Ferner kann die Einschubrichtung auch parallel zur Förderrichtung verlaufen, also einen Winkel von 0° einschliessen.

Das Halteorgan kann insbesondere als Längskörper ausgebildet sein. Die Längsachse des Längskörpers verläuft insbesondere parallel zur Einschubrichtung. Das heisst, der Fördergutbehälter wird parallel zur Längsrichtung des Halteorgans auf das Halteorgan geschoben.

Entsprechend kann das Halteorgan insbesondere so an der Förderkette bzw. am Kettenglied angeordnet sein, dass die Längsachse des Längskörpers schräg zur Förderrichtung ausgerichtet ist. Das heisst, die Längsachse ist in einem Winkel von grösser 0° zur Förderrichtung, wie oben beschrieben, ausgerichtet.

Das Halteorgan kann zum Beispiel einen Grundkörper in Form eines Winkelprofils umfassen.

Der Fördergutbehälter kann als Längskörper ausgebildet sein. Die Einschubrichtung verläuft insbesondere parallel zur Längsachse des Längskörpers.

Entsprechend ist der Fördergutbehälter insbesondere so am Halteorgan angeordnet, dass die Längsachse des Längskörpers schräg zur Förderrichtung ausgerichtet ist. Das heisst, die Längsachse ist in einem Winkel von grösser 0° zur Förderrichtung, wie oben beschrieben, ausgerichtet.

Die Halteorgane sind jeweils insbesondere lösbar am Kettenförderer, insbesondere an der Förderkette bzw. am Kettenglied befestigt. Die lösbare Verbindung kann eine Form- und/oder Krattschlussverbindung sein. Die Verbindung kann eine Clip-, Rast- oder Schnappverbindung sein.

Die Halteorgane können hierzu jeweils einen Verbindungskörper umfassen, über welchen das Halteorgan am Kettenförderer, insbesondere an der Förderkette bzw. am Kettenglied befestigt ist. Der Verbindungskörper kann ein lösbarer oder nicht-lösbar Teil des Halteorgans sein.

Das Halteorgan umfasst insbesondere Klemmmittel, welche direkt oder indirekt auf den Fördergutbehälter eine Klemmkraft ausüben. Die Fördergutbehälter werden durch die Klemmmittel direkt oder indirekt am Halteorgan klemmend gehalten.

Die Klemmmittel drücken den Fördergutbehälter unter Ausbildung einer klemmenden Halterung insbesondere direkt oder indirekt gegen ein Gegenelement am Halteorgan.

Die klemmende Halterung soll ein Lösen des Fördergutbehälters vom Halteorgan verhindern.

Indirekt auf den Fördergutbehälter eine Klemmkraft ausüben heisst insbesondere, dass die Klemmmittel auf das mit dem Fördergutbehälter geförderte Fördergut einwirken.

Den Fördergutbehälter indirekt gegen ein Gegenelement am Halteorgan drücken bedeutet insbesondere, dass das mit dem Fördergutbehälter geförderte Fördergut gegen das Gegenelement gedrückt wird.

So wird der Fördergutbehälter bzw. die Einheit aus Fördergutbehälter und Fördergut insbesondere zwischen Klemmmittel und Gegenelement festgeklemmt.

Bei einer indirekten Klemmung des Fördergutbehälters wird folglich das mit dem Fördergutbehälter geförderte Fördergut wie der Fördergutbehälter selbst gegen ein Lösen vom Halteorgan gesichert.

Das Gegenelement kann ein starres Element sein. Das Gegenelement ist insbesondere als Anschlag ausgebildet. Das Gegenelement kann z. B. eine Anschlagleiste sein.

Es ist möglich, dass das Halteorgan sowohl ein Gegenelement für den Fördergutbehälter als auch ein Gegenelement für das mit dem Fördergutbehälter geförderte Fördergut enthält. Dadurch wird sowohl der Fördergutbehälter bzw. ein leerer Fördergutbehälter als auch das mit dem Fördergutbehälter geförderte Fördergut gegen ein Lösen vom Halteorgan gesichert.

Halteorgan und Fördergutbehälter sind insbesondere so ausgelegt, dass das Klemmmittel beim Einschieben des Fördergutbehälters auf das Halteorgan vorgespannt, insbesondere durch den Fördergutbehälter vorgespannt wird.

Durch die klemmende Halterung des Fördergutbehälters bzw. der Einheit aus Fördergutbehälter und Fördergut sind Fördergutbehälter und Fördergut gegen ein Lösen von den Halteorganen gesichert und zwar unabhängig von der räumlichen Lage des Halteorgans entlang seines Förderweges sowie unabhängig von auf das Halteorgan bzw. den Fördergutbehälter wirkenden Beschleunigungs- und Bremskräften.

Beschleunigungs- und Bremskräfte treten beispielsweise auf, wenn das Halteorgan zwecks Übernahme eines Fördergutbehälters angehalten bzw. abgebremst und im Anschluss an die Übernahme wieder beschleunigt werden muss. Beschleunigungs- und Bremskräfte treten auch im Zusammenhang mit Betriebsstörungen auf, bei welchen die Förderung des Fördergutes verlangsamt oder unterbrochen werden muss.

Dies bedeutet, dass sich die Fördergutbehälter und mit diesen das Fördergut entlang von beliebig verlaufenden Förderwegen im dreidimensionalen Raum fördern lassen. Der Förderweg kann z. B. positive oder negative Steigungen, Kurven sowie wendelartige Verläufe beinhalten. Sogar eine Förderung kopfüber ist möglich.

Die Förderung des Fördergutes ist folglich nicht auf eine einzelne Förderebene beschränkt. Entsprechend gross ist auch der Gestaltungsspielraum bei der Planung der Förderwege.

Die Fördergutbehälter sind insbesondere zum Fördern eines Fördergutes in Form von Stückgütern ausgelegt. Die Fördergutbehälter können dabei jeweils zum Fördern von einem einzelnen oder von mehreren Stückgütern ausgelegt sein. Entsprechend ist der Fördergutbehälter ein Stückgutbehälter.

Der Stückgutbehälter kann insbesondere zum gruppenweisen Fördern von mehreren Stückgütern ausgelegt sein.

Die Stückgüter können z. B. Rohlinge oder Halbfabrikate bzw. Werkstücke sein, welche mittels der Fördereinrichtung zu den einzelnen Bearbeitungsstationen gefördert werden. Solche Halbfabrikate können zum Beispiel Gasfeuerzeuge sein.

Die Stückgüter können auch Artikel wie Konsumgüter sein, welche in den Stückgutbehältern kommissioniert werden.

Die Klemmmittel umfassen insbesondere ein Klemmelement, welches eine Klemmkraft direkt oder indirekt auf den Fördergutbehälter ausübt. Der Fördergutbehälter wird dabei vom Klemmelement direkt oder indirekt gegen das Gegenelement gedrückt.

Das Klemmelement kann ein elastisches bzw. federelastisches Element sein, welches eine Rückstellkraft, insbesondere Federkraft, direkt oder indirekt auf den Fördergutbehälter ausübt. Die Rückstellkraft entspricht dabei der Klemmkraft. Das Klemmelement kann beispielsweise Federstahl insbesondere ein Federstahlblech umfassen oder aus diesem bestehen.

Das Klemmelement kann aus Federstahl oder Kunststoff sein.

Gemäss einer besonderen Ausführungsform ist das Klemmelement ein gewölbtes Federstahlblech. Beim Einschieben des Fördergutbehälters auf das Halteorgan wird der Fördergutbehälter über das gewölbte Federstahlblech unter Abflachung desselbigen geschoben. Die Rückstellkraft des abgeflachten Federstahlblechs drückt den Fördergutbehälter direkt oder indirekt an das Gegenelement.

Die Klemmmittel können allerdings auch einen Bügelmechanismus umfassen, mittels welchem der Fördergutbehälter direkt oder indirekt klemmend an das Gegenelement gedrückt wird.

Die Klemmmittel sind insbesondere so ausgebildet, dass die direkt oder indirekt auf den Fördergutbehälter wirkende Klemmkraft senkrecht zur Einschubrichtung des Fördergutbehälters wirkt.

Das Gegenelement selbst kann ebenfalls als Klemmmittel, insbesondere als Klemmelement ausgebildet sein. So kann das Gegenelement ebenfalls ein elastisches bzw. federelastisches Element sein, welches eine Rückstellkraft, insbesondere Federkraft, direkt oder indirekt auf den Fördergutbehälter ausübt. Der Förderguthehälter kann folglich auch zwischen zwei Klemmelementen festgeklemmt werden.

Die Kettenglieder weisen jeweils Verbindungsschnittstellen auf, über welche diese insbesondere lösbar miteinander verbunden sind. Die lösbare Verbindung ist insbesondere werkzeugfrei. Die Verbindungsschnittstellen können insbesondere Kupplungselemente umfassen.

Die Verbindung zwischen den Kettengliedern ist insbesondere eine Gelenkverbindung.

So können die Kupplungselemente Paarungen von Gelenkkopf und Gelenkpfanne umfassen.

Die Kettenglieder weisen jeweils insbesondere mindestens eine Laufrolle auf. Die Kettenglieder weisen jeweils insbesondere mindestens zwei Laufrollen auf.

Das Kettenglied ist insbesondere als Laufwagen ausgebildet. Der Laufwagen ist insbesondere schienengeführt. Die Schiene kann eine Laufschiene sein.

Der Kettenförderer wird gemäss dieser Weiterbildung unter anderem durch die Förderkette, die Halteorgane, die Stückgutbehälter sowie durch die Laufschiene ausgebildet.

Die Kettenglieder, insbesondere die Laufwagen, weisen jeweils insbesondere einen Grundkörper auf, an welchem das Halteorgan befestigt ist. Das Halteorgan kann direkt oder indirekt, z. B. über ein weiter unten beschriebenes Abschirmelement, am Kettenglied bzw. Laufwagen befestigt sein.

Ferner sind auch die Verbindungsschnittstellen am Grundkörper angeordnet. Überdies sind auch die Laufrollen am Grundkörper befestigt. Der Grundkörper kann zum Beispiel aus Kunststoff bestehen.

Der Fördergutbehälter zeichnet sich durch mindestens eine Fördergutaufnahme aus, welche einen Aufnahmeraum zur Aufnahme des Fördergutes ausbildet. Der Fördergutbehälter kann eine einzelne Fördergutaufnahme oder mehrere Fördergutaufnahmen ausbilden.

Der Fördergutbehälter und mit ihm die mindestens eine Fördergutaufnahme ist insbesondere formstabil, d.h. formhaltig. Der Fördergutbehälter ist insbesondere starr bzw. steif ausgebildet.

Die Fördergutaufnahme bildet insbesondere eine umlaufende Einfassungswand aus, welche das Fördergut in der Fördergutaufnahme seitlich einfassen. Die Wand kann geschlossen umlaufend sein oder Unterbrüche aufweisen.

Die Fördergutaufnahme bildet insbesondere einen Aufnahmeboden aus, welchem das Fördergut auf- bzw. anliegt, insbesondere Schwerkraft bedingt auf- bzw. anliegt. Der Aufnahmeboden kann geschlossen sein oder Unterbrüche aufweisen.

Die Fördergutaufnahme ist zum Beispiel als Vertiefung ausgebildet. Die Vertiefung kann eine Mulde oder sacklochartig sein.

Handelt es sich beim Fördergutbehälter um einen Stückgutbehälter, so ist die Fördergutaufnahme insbesondere als Stückgutaufnahme zur Aufnahme von mindestens einem Stückgut ausgebildet. Die Stückgutaufnahme kann das mindestens eine Stückgut vollständig oder teilweise aufnehmen.

Gemäss einer Weiterbildung der Erfindung ist die Stückgutaufnahme zur Aufnahme von einem einzelnen Stückgut ausgebildet. Die Stückgutaufnahme, insbesondere die Vertiefung, ist insbesondere zur passgenauen Aufnahme mindestens eines Abschnittes des Stückgutes ausgebildet. Das Stückgut wird insbesondere in die Stückgutaufnahme eingesetzt bzw. hineingesteckt.

Die Stückgutaufnahme ist beispielsweise so ausgebildet, dass das in die Stückgutaufnahme eingesetzte Stückgut mit einem Abschnitt, insbesondere einem Endabschnitt, aus der Stückgutaufnahme herausragt. Die Stückgutaufnahme kann das Stückgut allerdings auch vollständig aufnehmen.

Gemäss einer Weiterbildung der Erfindung enthält der Stückgutbehälter eine Mehrzahl von Stückgutaufnahmen zur Aufnahme von jeweils einem Stückgut. Die Stückgutaufnahmen sind insbesondere in mindestens einer Reihe angeordnet. Die mindestens eine Reihe von Stückgutaufnahmen verläuft insbesondere längs der Längsachse des Stückgutbehälters, wenn dieser als Längskörper ausgebildet ist.

Der Stückgutbehälter ist insbesondere nicht nur zum Fördern der Stückgüter sondern auch als Stückguthalter, insbesondere Werkstückhalter bzw. Stückgutträger, insbesondere Werkstückträger, zum Bearbeiten der Stückgüter an einer Bearbeitungsstation ausgelegt. Dabei ist es wichtig, dass die Stückgüter in der Stückgutaufnahme einen definierten, insbesondere festen Halt bzw. Sitz haben.

Der Stückgutbehälter mit der mindestens einen Stückgutaufnahme ist daher insbesondere derart ausgebildet, dass das Stückgut in der Stückgutaufnahme relativ zum Stückgutbehälter definiert ausgerichtet bzw. positioniert ist.

Dies hat den Vorteil, dass die Stückgüter bereits in der korrekten Lage einer Bearbeitungsstation zugefördert werden können. Ein zusätzliche Ausrichtung der Stückgüter zwecks Ausführung eines Bearbeitungsschrittes ist nicht notwendig.

Dies wird insbesondere durch eine passgenaue Aufnahme der Stückgüter in den Stückgutaufnahmen gewährleistet.

Der Stückgutbehälter kann beispielsweise als Aufnahmeblock mit Stückgutaufnahmen ausgebildet sein. Der Aufnahmeblock ist insbesondere einstückig ausgebildet. Der Aufnahmeblock ist insbesondere massiv. Der Aufnahmeblock kann aus Kunststoff sein.

Der Fördergutbehälter kann mit einem Verschlussdeckel verschliessbar, insbesondere wiederverschliessbar sein. Die Sicherung des Fördergutes im Behälter gegen ein Herausfallen aus der Fördergutaufnahme kann in diesem Fall über den Verschlussdeckel geschehen. Entsprechend braucht lediglich der Fördergutbehälter nicht jedoch das Fördergut am Halteorgan klemmend gehalten zu werden.

Umfasst der Fördergutbehälter einen Verschlussdeckel, so ist dieser insbesondere als Kasten, Kiste, Box, Schachtel oder Schale ausgebildet.

Ein solcher Fördergutbehälter kann insbesondere zum Kommissionieren von Artikeln ausgelegt sein. Beim Kommissionieren wird in den Fördergutbehältern jeweils eine Zusammenstellung von unterschiedlichen Artikeln erstellt, welche an verschiedenen Stationen entlang eines Förderweges bereitgestellt und an den Fördergutbehälter abgegeben werden. Bei der Kommissionierung kann es sich sowohl um Kundenaufträge (Warenbestellungen) als auch um Produktionsaufträge handeln.

Das Halteorgan umfasst insbesondere einen Einschubabschnitt, entlang welchem der Fördergutbehälter auf das Halteorgan geschoben wird.

Der Einschubabschnitt verläuft insbesondere parallel zur Längsachse des Halteorgans, falls dieses als Längskörper ausgebildet ist.

Der Einschubabschnitt umfasst insbesondere eine Behälterauflage. Der Fördergutbehälter liegt der Behälterauflage auf. Der Fördergutbehälter ist insbesondere der Behälterauflage aufliegend in Einschubrichtung auf das Halteorgan schiebbar. Der Fördergutbehälter gleitet beim Einschieben auf der Behälterauflage.

Gemäss einer besonderen Ausführung der Erfindung bildet das Federelement Teil der Behälterauflage.

Der Einschubabschnitt enthält ferner insbesondere seitliche Führungen. Diese verhindern das Ausweichen des einzuschiebenden Fördergutbehälters zur Seite hin.

Das Halteorgan bildet im Bereich des Einschubabschnittes einen Aufnahmebereich zur Aufnahme des Stückgutbehälters sowie der mit diesem geförderten Stückgüter aus.

Das Halteorgan weist insbesondere ein der Behälterauflage gegenüber liegendes Rückhaltemittel auf, welches ein Wegbewegen des Fördergutbehälters von der Behälterauflage in eine Richtung senkrecht zur Einschubrichtung verhindern. Das Rückhaltemittel kann beispielsweise ein Anschlag sein.

Gemäss einer Weiterbildung der Erfindung ist das Rückhaltemittel im Weiteren dazu ausgelegt, die mit dem Stückgutbehälter geförderten Stückgüter gegen ein Herausfallen aus den Stückgutaufnahmen zu sichern.

Das Rückhaltemittel kann insbesondere dem weiter oben beschriebenen Gegenelement entsprechen.

Gemäss einer Ausführungsvariante der Erfindung sind zwischen den Kettengliedern und den Fördergutbehältern Abschirmelemente vorgesehen, welche die unterhalb des Förderbereichs liegenden Anlagenteile des Kettenförderers und insbesondere die Förderkette selbst vom Förderbereich abgrenzen bzw. abschirmen. Die Abschirmelemente sind insbesondere flächenförmig.

So kann der Kettenförderer einen Modulbandförderer umfassen. Die Abschirmelemente werden durch die Modulbandglieder ausgebildet. Die Modulbandglieder entsprechen wiederum den Kettenglieder der Förderkette.

Die Abschirmelemente können ferner auch Plattenelemente sein. So kann der Kettenförderer zum Beispiel einen Plattenförderer umfassen.

Die Abschirmelemente können eine entlang der Förderrichtung durchgängige Auflagefläche ausbilden.

Sofern die Abschirmelemente nicht selbst Teil der Förderkette sind, können diese an der Förderkette bzw. an deren Kettenglieder befestigt sein. Die Befestigung kann lösbar sein. Die Abschirmelemente können beispielsweise zwischen Förderkette und Halteorgane angeordnet sein.

Die Kettenglieder, an welchen die Abschirmelemente befestigt sind, können insbesondere Laufwagen der oben beschriebenen Art sein.

Die Halteorgane können nun an den Abschirmelementen, wie Plattenelementen oder Modulbandglieder, befestigt, insbesondere lösbar befestigt sein.

Es ist allerdings auch denkbar, dass die Abschirmelemente selbst Teil der Halteorgane bilden.

So können förderseitig auf den Abschirmelementen vorstehende Halteelemente angeordnet sein, welche die Fördergutbehälter auf den Abschirmelementen halten. Die Halteelemente können Halteschenkel sein.

Die Halteelemente sind insbesondere Klemmelemente. Die Klemmelemente können insbesondere vom Abschirmelemente abstehende Klemmschenkel, zum klemmenden Halten der Fördergutbehälter sein.

Der Kettenförderer der Fördereinrichtung ist insbesondere zur getakteten Förderung der Fördergutbehälter und entsprechend des auf den Fördergutbehältern angeordneten Fördergutes ausgelegt. Entsprechend umfasst die Fördereinrichtung auch eine Steuerung.

Gemäss einer Weiterbildung der Fördereinrichtung umfasst diese im Weiteren eine Pufferstation. Eine Pufferstation wird eingesetzt, wenn das Fördergut beispielsweise zwischen zwei Bearbeitungsschritten eine Erholungsphase durchlaufen muss, in weilcher dieses z. B. abkühlt. Eine Pufferstation kann auch Einsatz finden bei Betriebsstörungen oder Unterbrüchen in der Fertigungskette, welche eine Pufferung der zugeförderten Fördergutbehälter vor ihrer Weiterbearbeitung notwendig machen.

Die Pufferstation enthält insbesondere ein flächiges Förderorgan, auf welchem aus den Halteorganen herausgeschobene, mit Fördergut bestückte Fördergutbehälter oder leere Fördergutbehälter gepuffert werden können. Das flächige Förderorgan kann ein Förderband oder Plattenförderer sein. Die Fördergutbehälter werden auf dem flächigen Förderorgan insbesondere ungetaktet, d.h. nicht getaktet, gefördert.

Die Fördergutbehälter können auf dem flächigen Förderorgan zwecks Pufferung zusammengeschoben, insbesondere aneinander geschoben werden.

Die Fördereinrichtung umfasst nun eine Übergabezone, in welcher die Fördergutbehälter von Halteorganen des Kettenförderers auf das flächige Förderorgan, wie Förderband, der Pufferstation überführt werden. Hierzu kann in der Übergabezone eine Übergabevorrichtung vorgesehen sein, mittels welcher die zu puffernden Fördergutbehälter vom Halteorgan auf das flächigen Förderorgan, wie Förderband, übergeben, insbesondere geschoben werden.

Der Kettenförderer und das flächige Förderorgan der Pufferstation können in der Übergabezone insbesondere zueinander parallele, gleichgerichtete Förderrichtungen aufweisen.

Die Fördergutbehälter werden auf dem flächige Förderorgan insbesondere mit einer kleineren Fördergeschwindigkeit weiter gefördert als die Fördergeschwindigkeit des Kettenförderers.

Die Fördergutbehälter werden insbesondere schräg, d.h. mit einer seitlichen Bewegungskomponente und einer Bewegungskomponente in Förderrichtung, vom Halteorgan geschoben und dem flächigen Förderorgan der Pufferstation übergeben.

Die Übergabevorrichtung kann jeweils bewegte oder stationäre Führungselemente umfassen.

Die Übergabe kann während der Förderung der Halteorgane oder im Stillstand der Halteorgane erfolgen.

Die Fördergutbehälter werden in der Übergabezone insbesondere von einer getakteten Förderung durch den Kettenförderer in eine ungetaktete Förderung durch das flächige Förderorgan überführt.

Ferner umfasst die Fördereinrichtung eine Übernahmezone, in welcher die Fördergutbehälter von den Förderorganen aus der Pufferstation übernommen werden. Hierzu kann in der Übernahmezone eine Übernahmevorrichtung vorgesehen sein, mittels welcher die zu puffernden fördergutbehälter vom flächigen Förderorgan, wie Förderband, der Pufferstation auf Halteorgane des Kettenförderers überführt, insbesondere geschoben werden.

Die Übernahmevorrichtung kann jeweils bewegte oder stationäre Führungselemente umfassen.

Die Übernahme kann während der Förderung der Halteorgane oder im Stillstand der Halteorgane erfolgen.

Die Fördergutbehälter können in der Übernahmezone von einer ungetakteten Förderung durch das flächige Förderorgan in eine getaktete Förderung durch den Kettenförderer überführt werden.

Die Position und Geschwindigkeit der Fördergutbehälter werden insbesondere in der Übernahmezone mittels der Übernahmevorrichtung mit den getaktet in die Übernahmezone bewegten Halteorganen synchronisiert.

Gemäss einer Weiterbildung der Erfindung werden die Fördergutbehälter schräg, d.h. mit einer seitlichen Bewegungskomponente und einer Bewegungskomponente in Förderrichtung des Förderorgans auf das Halteorgan geschoben.

Die Förderrichtung des flächigen Förderorgans ist in der Übernahmezone insbesondere parallel zur Förderrichtung der Halteorgane. Die Förderrichtung des flächigen Förderorgans kann zur Förderrichtung der Halteorgane gleichgerichtet oder dieser entgegen gesetzt gerichtet sein. Letztere Richtungsvariante kann das Einschieben der Fördergutbehälter in die Halteorgane unterstützen.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1a: eine Frontansicht eines Halteorgans mit einem Stückgutbehälter gemäss einer ersten Ausführungsform;
- Figur 1b: eine Frontansicht des Halteorgans nach Figur 1a ohne Stückgutbehälter;
- Figur 2: eine Seitenansicht des Halteorgans mit Stückgutbehälter gemäss Figur 1a and 1b;
- Figur 3: eine Ansicht in Förderrichtung des auf einem Laufwagen angeordneten Halteorgans mit Stückgutbehälter gemäss Figur 1a, 1b und 2;
- Figur 4: eine Draufsicht einer ersten Ausführungsform einer Fördereinrichtung mit Pufferstation gemäss Erfindung;
- Figur 5: eine Draufsicht einer zweiten Ausführungsform einer Fördereinrichtung mit Pufferstation gemäss Erfindung;
- Figur 6: eine perspektivische Ansicht einer weiteren Ausführungsform einer Fördereinrichtung mit Halteorganen gemäss Erfindung.

Grundsätzlich sind in den Figuren gleiche Teile mit gleichen Bezugszeichen versehen.

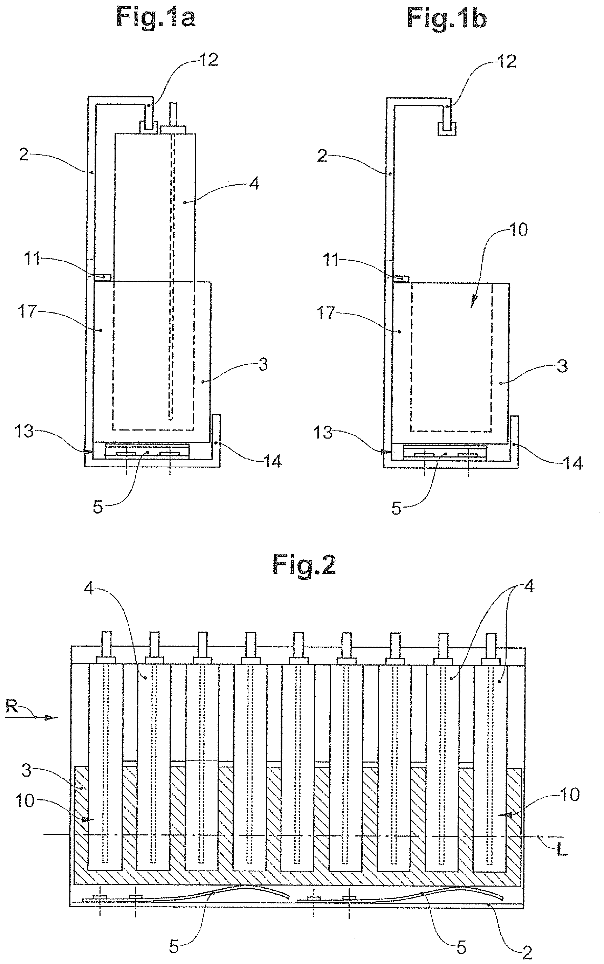

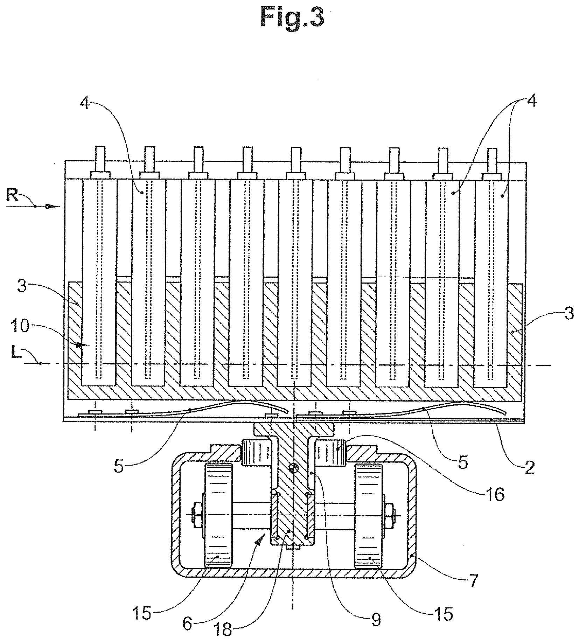

Der Stückgutbehälter 3 nach den Figuren 1a, 1b und 2 bis 5 ist als Längskörper mit einer Mehrzahl von entlang seiner Längsachse L in einer Reihe hintereinander angeordneten Stückgutaufnahmen 10 ausgebildet. Die Stückgutaufnahmen 10 sind Vertiefungen, in welche die Stückgüter 4 eingebracht werden. Die Stückgutaufnahmen 10 nehmen die Stückgüter 4 jeweils passgenau auf, so dass die Stückgüter 4 in den Stüekgutaufnahmen 10 einen definierten Halt haben. Die Stückgüter 4 ragen mit einem oberen Endabschnitt aus den Stückgutaufnahmen 10 heraus.

Gemäss der vorliegenden Ausführung sind die Stückgüter 4 Halbfabrikate von Gasfeuerzeugen. Der Stückgutbehälter 3 dient dabei gleichzeitig als Stückguthalter zur Vornahme von Bearbeitungsschritten an den Gasfeuerzeugen 4. Dies kann beispielsweise das Befüllen des Gasfeuerzeuges mit Gas und/oder die Montage des Kopfes mit Reibrad und Zündstein sein.

Zur Förderung der Stückgüter 4 im Stückgutbehälter 3 ist dieser seitlich in ein Halteorgan 2 einschiebbar. Das Halteorgan 2 ist als Winkelprofil ausgebildet. Das Winkelprofil bildet einen Einschubabschnitt 13 mit Behälterauflage und Seitenführung 14 aus. Die Seitenführung 14 umfasst seitliche Profilwände.

Das Halteorgan 2 bildet im Bereich des Einschubabschnittes 13 einen Aufnahmebereich 17 zur Aufnahme des Stückgutbehälters 3 sowie der mit diesem geförderten Feuerzeugen 4 aus.

Der Einschubabschnitt 13 umfasst ferner einen Profilboden, welcher den Aufnahmebereich 17 zur Förderkette 20 hin begrenzt. Am Profilboden sind zwei in den Aufnahmebereich 17 gewölbte Federstahlblechelemente 5 angeordnet. Diese bilden eine Behälterauflage aus.

Im Weiteren umfasst das Halteorgan 2 ein erstes Gegenelement 11 in Form von mindestens einer in den Aufnahmebereich 17 ragenden Auskragung. Die Auskragung wird durch einen aus der Profilwand in den Aufnahmebereich 17 gebogenen Wandabschnitt ausgebildet.

Ferner umfasst das Halteorgan 2 ein zweites Gegenelement 12 in Form einer weiteren, in den Aufnahmebereich 17 ragenden Auskragung. Die Auskragung wird durch einen in den Aufnahmebereich 17 gebogenen Endabschnitt der seitlichen Profilwand ausgebildet.

Beim Einschieben des Stückgutbehälters 3 in den Einschubabschnitt 13 des Halteorgans 2 wird dieser nun über die konkav in den Aufnahmebereich 17 gekrümmten Federstahlblechelemente 5 geschoben. Die Federstahlblechelemente 5 werden dabei gestaucht und die Krümmung abgeflacht. Durch die nun wirkende Rückstellkraft der Federstahlblechelemente 5 wird der Stückgutbehälter 3 vom Profilboden weg in Richtung des ersten Gegenelements 11 gedrückt und steht diesem an. Der Stückgutbehälter 3 ist nun zwischen erstem Gegenelement 11 und dem Federstahlblechelement 5 festgeklemmt und gegen ein Lösen vom Halteorgan 2 gesichert.

Sind auf dem Stückgutbehälter 3 Stückgüter 4 angeordnet, so werden die Stückgüter 4 beim Einschieben des Stückgutbehälter 3 über die Federstahlblechelemente 5 durch die Federstahlblechelemente 5 über den Stückgutbehälter 3 zum zweiten Gegenelement 12 hin gedrückt und stehen diesem an. Die Stückgüter 4 sind im Halteorgan 2 festgeklemmt und gegen ein Herausfallen aus den Stückgutaufnahmen 10 gesichert.

Die Halteorgane 2 sind jeweils auf einem Kettenglieder 6 einer Förderkette 20 befestigt. Die Kettenglieder 6 sind als Laufwagen 56 ausgebildet, welche über Gelenkverbindungen miteinander zur Förderkette 20 verbunden sind.

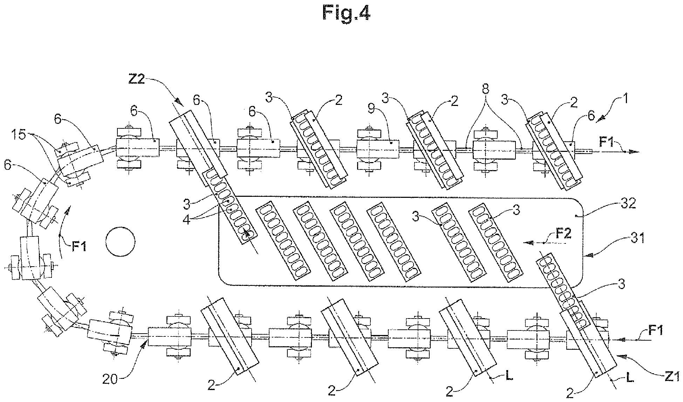

Die Laufwagen weisen jeweils einen Grundkörper 9 auf. Der Grundkörper 9 umfasst zur Ausbildung der Gelenkverbindung Kopplungselemente 8 (siehe Figur 4).

Ferner umfasst der Grundkörper 9 eine Verbindungsschnittstelle 18 zur Herstellung einer Verbindung mit dem Halteorgan 2. Die Halteorgane 2 sind also jeweils über die Verbindungsschnittstelle 18 am Grundkörper 9 des Laufwagens 6 befestigt.

Der Laufwagen 6 umfasst zwei Laufrollen 15, über welche der Laufwagen 6 entlang einer Laufschiene 7 abrollt. Ferner umfasst der Laufwagen 6 auch eine Führungsrolle 16, über welche der Laufwagen 6 entlang der Laufschiene 7 geführt wird.

Die Halteorgane 2 und mit ihnen die auf diesen angeordneten Stückgutbehälter 3 sind gegenüber der Förderrichtung F1 schräg, d.h. in einem Winkel von grösser 0° angeordnet (siehe Figur 4).

Die von den Halteorganen 2 gehaltenen Stückgutbehälter 3 werden nun mit den Stückgütern 4 mittels der angetriebenen Förderkette zwischen den einzelnen Bearbeitungsstationen gefördert. Da sowohl die Stückgutbehälter 3 als auch die Stückgüter 4 selbst im Halteorgan 2 festgeklemmt werden und so gegen ein Herausfallen gesichert sind, können diese entlang von komplexen Förderwegen im dreidimensionalen Raum gefördert werden. So kann der Förderweg starke Steigungen und Gefälle als auch wendelartige Kurvenbahnen umfassen. Eine Förderung kopfüber ist möglich.

Die Fördereinrichtung gemäss der Ausführungsform nach Figur 4 umfasst nun neben dem oben beschriebenen Kettenförderer im Weiteren eine Pufferstation 31. Ein zentrales Element der Pufferstation 31 bildet ein Förderband 32, auf welchem die Stückgutbehälter 3 mit den Stückgütern 4 bei Bedarf gepuffert werden können.
tDie Pufferstation 31 bildet mit dem Kettenförderer eine Übergabezone Z1 aus, in Die Pufferstation 31 bildet mit dem Kettenförderer eine Übergabezone Z1 aus, in welcher die in Förderrichtung F1 geförderten Stückgutbehälter 3 vom Halteorgan 2 auf das Förderband 32 der Pufferstation 31 geschoben werden. Die Förderrichtung F2 des Förderbandes 32 verläuft in der Übergabezone Z1 parallel zur Förderrichtung F1 des Kettenförderers. Allerdings ist die Fördergeschwindigkeit des Förderbandes 32 geringer als die Fördergeschwindigkeit des Kettenförderers.

In der Übergabezone Z1 kann eine Übergabevorrichtung vorgesehen sein, mittels welcher der Stückgutbehälter 3 vom Halteorgan 2 auf das Förderband 32 geschoben werden (nicht gezeigt).

Ferner bildet die Pufferstation 31 mit dem Kettenförderer stromabwärts eine übernahmezone Z2 aus, in welcher die in Förderrichtung F2 geförderten Stückgutbehälter 3 mit den Stückgütern 4 vom Förderband 32 der Pufferstation 31 auf die Halteorgane 2 geschoben werden.

Die Pufferstation 31 enthält im Bereich der Übernahmezone Z2 eine Begrenzung, welche ein Herabfallen der Stückgutbehälter 3 vom Förderband 32 verhindern (nicht gezeigt).

Da die Förderrichtung F1 des Kettenförderers in einer Umlenkung um 180° versetzt wird, verlaufen nun die Förderrichtung F2 des Förderbandes 32 und die Förderrichtung F1 des Kettenförderers in der Übernahmezone Z2 entgegen gesetzt jedoch parallel zueinander. Die einander entgegengesetzten Förderrichtungen F1, F2 unterstützen nun den Schiebevorgang der Stückgutbehälter 3 vom Förderband 32 auf das Halteorgan 2.

In der Übernahmezone Z2 kann eine Übernahmevorrichtung vorgesehen sein, mittels welcher der Stückgutbehälter 3 vom Förderband 32 auf das Halteorgan 2 geschoben werden (nicht gezeigt).

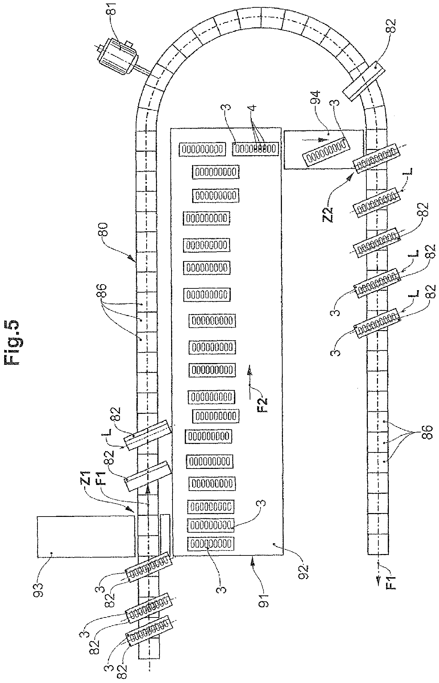

Die Fördereinrichtung gemäss dem Ausführungsbeispiel nach Figur 5 umfasst einen Kettenförderer 80 sowie eine Pufferstation 91. Der Kettenförderer 80 entspricht in seinem Grundaufbau einem Plattenförderer und umfasst Förderplatten 86, welche jeweils an einer Förderkette bzw. an dessen Kettengliedern befestigt sind (nicht gezeigt). Die Förderkette wird aus miteinander gelenkig verbunden Laufwagen ausgebildet (nicht gezeigt).

Auf den Förderplatten 86 sind Halteorgane 82 angebracht, wie sie bereits weiter oben beschrieben wurden. Die vorliegenden Halteorgane 82 unterscheiden sich von den oben ausführlich beschriebenen Halteorganen lediglich in der Art der Befestigung auf den Förderplatten 86.

Die Halteorgane 82 nehmen Stückgutbehälter 3 auf. Die Stückgutbehälter 3 entsprechen den bereits weiter oben beschriebenen Stückgutbehältern. Sie enthalten Stückgutaufnahmen zur Aufnahme von jeweils einzelnen Stückgütern 4.

Die Halteorgane 82 und die Stückgutbehälter 3 sind als Längskörper ausgebildet. Sie sind mit ihrer Längsachse L gegenüber der Förderrichtung F1 des Kettenförderers 80 schräg auf den Förderplatten 86 angeordnet. Die Längsachse L schliesst also mit der Förderrichtung F1 einen spitzen Winkel ein.

Die Pufferstation 91 enthält ein Förderband 92, auf welchem die Stückgutbehälter 3 mit den Stückgütern 4 bei Bedarf gepuffert werden können.

Die Pufferstation 91 bildet nun mit dem Kettenförderer 80 eine Übergabezone Z1 aus, in welcher die in Förderrichtung F1 geförderten Stückgutbehälter 3 vom Halteorgan 82 auf das Förderband 92 der Pufferstation 91 geschoben werden. Die Förderrichtung F2 des Förderbandes 92 verläuft in der Übergabezone Z1 parallel zur Förderrichtung F1 des Kettenförderers 80. Allerdings ist die Fördergeschwindigkeit des Förderbandes 92 geringer als die Fördergeschwindigkeit des Kettenförderers 80.

In der Übergabezone Z1 ist eine Übergabevorrichtung 93 vorgesehen, mittels welcher die Stückgutbehälter 3 von den Halteorganen 82 auf das Förderband 92 geschoben werden.

Ferner bildet die Pufferstation 91 mit dem Kettenförderer 80 stromabwärts eine Übernahmezone Z2 aus, in welcher die in Förderrichtung F2 geförderten Stückgutbehälter 3 vom Förderband 92 der Pufferstation 91 auf die Halteorgane 82 geschoben werden.

In der Übernahmezone Z2 ist eine Übernahmevorrichtung 94 vorgesehen, mittels welcher die Stückgutbehälter 3 vom Förderband 92 auf die Halteorgane 82 geschoben werden.

Die Pufferstation 91 enthält im Bereich der Übernahmezone Z2 eine Begrenzung, welche ein Herabfallen der Stückgutbehälter 3 vom Förderband 92 verhindern (nicht gezeigt).

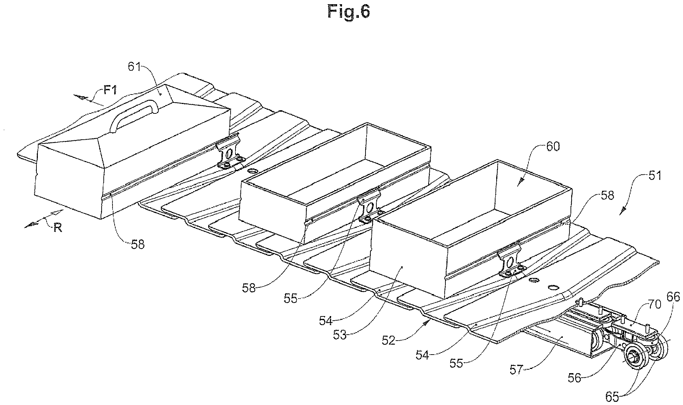

Die Fördereinrichtung 51 gemäss dem Ausführungsbeispiel nach Figur 6 umfasst einen Plattenförderer. Der Plattenförderer enthält Förderplatten 54, welche jeweils an einer Förderkette 70 befestigt sind.

Die Förderkette 70 wiederum wird aus miteinander gelenkig verbunden Laufwagen 56 ausgebildet. Die Laufwagen 56 sind in einer Laufschiene 57 geführt, welche den Förderweg vorgibt. Die Förderplatten 54 sind entsprechend auf den Laufwagen 56 befestigt.

Im Gegensatz zum Ausführungsbeispiel nach Figur 5 bilden hier die Förderplatten 54 Teil der Halteorgane 52 aus. Auf den Förderplatten 54 sind von diesen abstehende Halteschenkel 55 angeordnet. Die Halteschenkel 55 sind nachgiebig ausgestaltet.

Die Halteschenkel 55 sind Teil des Halteorgans 52 und weisen Halteabschnitte, auf über welche die Stückgutbehälter 53 jeweils von den Halteschenkeln 55 auf den Förderplatten 54 gehalten werden.

Die Halteschenkel 55 sind jeweils paarweise auf den Förderplatten 54 mit einander zugewandten Halteabschnitten angeordnet. Sie begrenzen einen Aufnahmebereich zur Aufnahme der Stückgutbehälter 53. Die Halteschenkel 55 sind hierzu entlang der Förderrichtung F1 aufeinander folgend in Reihe angeordnet.

Die Stückgutbehälter 53 sind als Kisten mit einer Fördergutaufnahme 60 zur Aufnahme von Fördergut ausgebildet. Die Stückgutbehälter 53 sind mit einem Verschlussdeckel 61 verschliessbar.

Die Stückgutbehälter 53 umfassen zwei seitlich angeordnete und in Einschubrichtung R verlaufende Einschubnuten 58. Die Halteschenkel 55 greifen beim Schieben des Stückgutbehälters 53 auf das Halteorgan 52 in die Einschubnuten 58 ein. Die Einschubnuten 58 bilden so eine seitliche Einschubführung aus.

## Patentansprüche

1. Fördereinrichtung (1) enthaltend einen Kettenförderer mit einer Förderkette (20) sowie mit einer Mehrzahl von an der Förderkette (20) angebrachten Fördergutbehältern (3) zur Aufnahme eines Fördergutes (4),
**dadurch gekennzeichnet, dass**
die Fördergutbehälter (3) jeweils über ein direkt oder indirekt mit der Förderkette (20) verbundenen Halteorgan (2) an der Förderkette (20) befestigt sind, wobei mindestens ein Fördergutbehälter (3) jeweils von einem Halteorgan (2) gehalten wird.

2. Fördereinrichtung nach Anspruch 1, **dadurch gekennzeichnet, dass** der Fördergutbehälter (3) zur Halterung in einer Einschubrichtung (R) auf oder in das Halteorgan (2) geschoben ist.

3. Fördereinrichtung nach einem der Ansprüche 1 bis 2, **dadurch gekennzeichnet, dass** das Halteorgan (2) lösbar, direkt oder indirekt an der Förderkette (20) befestigt ist.

4. Fördereinrichtung nach einem der Ansprüche 1 bis 3, **dadurch gekennzeichnet, dass** das Halteorgan (2) Klemmmittel (5) umfasst, welche den Fördergutbehälter (3) direkt oder indirekt am Halteorgan festklemmen.

5. Fördereinrichtung nach Anspruch 4, **dadurch gekennzeichnet, dass** die Klemmmittel (5) ein Klemmelement umfassen, welches eine Klemmkraft direkt oder indirekt auf den Fördergutbehälter (3) ausübt.

6. Fördereinrichtung nach einem der Ansprüche 4 bis 5, **dadurch gekennzeichnet, dass** das Halteorgan (2) ein Gegenelement (12) ausbildet, welches dazu ausgelegt ist, die mit dem Fördergutbehälter (3) geförderten Fördergüter (4) gegen ein Herausfallen aus der mindestens einen Fördergutaufnahme (10) zu sichern.

7. Fördereinrichtung nach einem der Ansprüche 4 bis 6, **dadurch gekennzeichnet, dass** die auf den Fördergutbehälter (3) wirkende Klemmkraft senkrecht zur Einschubrichtung (R) des Fördergutbehälters (3) gerichtet ist.

8. Fördereinrichtung nach einem der Ansprüche 1 bis 7, **dadurch gekennzeichnet, dass** der Fördergutbehälter (3) ein Längskörper ist und der Fördergutbehälter (3) derart am Halteorgan (2) angeordnet ist, dass die Längsachse (L) des Längskörpers parallel zur Einschubrichtung (R) verläuft.

9. Fördereinrichtung nach einem der Ansprüche 1 bis 8, **dadurch gekennzeichnet, dass** der Fördergutbehälter (3) mindestens eine Fördergutaufnahme (10) zur Aufnahme eines Fördergutes (4) aufweist.

10. Fördereinrichtung nach einem der Ansprüche 1 bis 9, **dadurch gekennzeichnet, dass** das Halteorgan (2) eine Behälterauflage ausbildet, welcher der Fördergutbehälter (3) aufliegt.

11. Fördereinrichtung nach Anspruch 10, **dadurch gekennzeichnet, dass** das Halteorgan (2) ein Gegenelement (11, 12) ausbildet, welches der Behälterauflage gegenüber liegt, und so ein Wegbewegen des Fördergutbehälters (3) von der Behälterauflage in eine Richtung senkrecht zur Einschubrichtung (R) verhindert.

12. Fördereinrichtung nach einem der Ansprüche 1 bis 11, **dadurch gekennzeichnet, dass** zwischen den Fördergutbehältern (3) und der Förderkette (70, 80) mindestens ein Abschirmelement (54, 86), insbesondere ein flächenförmige Abschirmelement angeordnet ist.

13. Fördereinrichtung nach Anspruch 12, **dadurch gekennzeichnet, dass** das mindestens eine Abschirmelement (86) zwischen den Halteorganen (82) und der Förderkette angeordnet ist, oder das mindestens eine Abschirmelemente (54) Teil der Halteorgane (52) ist.

14. Fördereinrichtung nach einem der Ansprüche 1 bis 13, **dadurch gekennzeichnet, dass** das Halteorgan (2) so ausgebildet und auf der Förderkette (20) angeordnet ist, dass die Einschubrichtung (R) zur Förderrichtung (F1) des Halteorgans (2) einen Winkel von grösser 0° ausbildet.

15. Fördereinrichtung nach einem der Ansprüche 1 bis 14, **gekennzeichnet durch** eine Pufferstation (31) mit einem flächigen Förderorgan (32) zur Pufferung von aus dem Halteorgan (2) heraus geschobenen Fördergutbehälter (3).

16. Verfahren zum Puffern von Fördergutbehälter (3) mit einer Fördereinrichtung (1) gemäss Anspruch 15,
**dadurch gekennzeichnet, dass**
die Fördereinrichtung (1) eine Übergabezone (Z1), in welcher die Fördergutbehälter (3) von den Halteorganen (2) geschoben und an das flächige Förderorgan (32) der Pufferstation (31) abgeben werden, und eine Übernahmezone (Z2), in welcher die Fördergutbehälter (3) vom Förderorgan (32) auf die Halteorgane (2) geschoben werden, ausbildet.

17. Verfahren nach Anspruch 16, **dadurch gekennzeichnet, dass** die Fördergutbehälter (3) in der Übergabezone (Z1) von einer getakteten Förderung durch den Kettenförderer in eine ungetaktete Förderung durch das flächige Förderorgan überführt werden und die Fördergutbehälter (3) in der Übernahmezone (Z2) von einer ungetakteten Förderung durch das flächige Förderorgan in eine getaktete Förderung durch den Kettenförderer überführt werden.

18. Verfahren nach Anspruch 17, **dadurch gekennzeichnet, dass** die Position und Geschwindigkeit der Fördergutbehälter (3) in der Übernahmezone (Z2) mittels einer Übernahmevorrichtung mit den getaktet in die Übernahmezone (Z2) bewegten Halteorgane (2) des Kettenförderers synchronisiert wird.

19. Verfahren nach einem der Ansprüche 16 bis 18, **dadurch gekennzeichnet, dass** die Förderrichtung (F2) des flächigen Förderorgans in der Übernahmezone (Z2) parallel zur Förderrichtung (F1) der Halteorgane (2) des Kettenförderers ist.
